(19) Europäisches Patentamt
European Patent Office
Office européen des brevets

(11) Veröffentlichungsnummer: **0 062 212**
**B1**

# (12) EUROPÄISCHE PATENTSCHRIFT

(45) Veröffentlichungstag der Patentschrift: **10.07.85**

(51) Int. Cl.4: **C 08 F 138/02**

(21) Anmeldenummer: **82102337.1**

(22) Anmeldetag: **22.03.82**

## (54) Teilchenförmiges, dotiertes Polyacetylen.

(30) Priorität: **02.04.81 DE 3113330**

(43) Veröffentlichungstag der Anmeldung: **13.10.82 Patentblatt 82/41**

(45) Bekanntmachung des Hinweises auf die Patenterteilung: **10.07.85 Patentblatt 85/28**

(84) Benannte Vertragsstaaten: **CH DE FR GB IT LI NL**

(56) Entgegenhaltungen:
**EP - A - 0 045 905**
**EP - A - 0 045 908**
**GB - A - 2 072 197**

(73) Patentinhaber: **BAYER AG, Konzernverwaltung RP Patentabteilung, D-5090 Leverkusen 1 Bayerwerk (DE)**

(72) Erfinder: **Hocker, Jürgen, Dr., Eichenweg 6, D-5060 Bergisch-Gladbach 2 (DE)**
Erfinder: **Müller, Hans Klaus, Dr., August-Kierspel-Strasse 149, D-5060 Bergisch-Gladbach 2 (DE)**
Erfinder: **Broich, Bruno, Dr., Sonnenweg 1, D-5060 Bergisch-Gladbach 2 (DE)**

**EP 0 062 212 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es ist bekannt, Polyacetylene durch Polymerisation von Acetylen mit Hilfe von metallorganischen Mischkatalysatoren herzustellen (J. Polym. Sci. Bd. 12, Seiten 11—20). Es ist ferner bekannt, kristalline Folien aus Polyacetylen zu dotieren durch Behandeln mit gasförmigen Elektronenakzeptordotiermitteln, so daß ihre elektrische Leitfähigkeit verbessert wird (US-PS 4 222 903).

Diese Erfindung betrifft ein Verfahren zur Herstellung von dotiertem Polyacetylen in Form von in einem flüssigen Medium suspendierten Teilchen einer speziellen physikalischen Beschaffenheit (Faserknäuelchen, »Kletten«). Die Struktur der Teilchen wird durch die Figur I erläutert (Vergrößerung 1 : 105). Sie ist erfindungswesentlich. Ausgangspunkt für die vorliegende Erfindung ist eine Suspension von Polyacetylenteilchen in Form von Faserknäuelchen oder »Kletten«. Diese Suspension erhält man, indem man gasförmiges Acetylen bei Temperaturen von —100°C bis +80°C in eine Lösung eines metallorganischen Mischkatalysators in einem organischen Lösungsmittel unter Agitation einleitet, bis sich pro Liter Lösung maximal 30 g Polyacetylen gebildet haben. Das Lösungsmittel für den Katalysator und gleichzeitig Suspendiermittel für die Polyacetylenteilchen ist in der Regel ein aliphatischer oder aromatischer Kohlenwasserstoff, der auch halogeniert sein kann, beispielsweise Benzol, Toluol, Chlorbenzol, Tetralin, Methylenchlorid oder Chloroform.

Der metallorganische Mischkatalysator oder Ziegler-Katalysator ist ein Umsetzungsprodukt aus, einerseits, Verbindungen von Schwermetallen der Gruppen 4b, 5b, 6b, 7b und 8 des Periodensystems der Elemente (Handbook of Chemistry and Physics, 47. Auflage (1966), S. B 3 — Chem. Rubber Company, Cleveland, Ohio/USA), und, andererseits, Aluminiumalkylen oder Aluminiumalkylhalogeniden. Ziegler-Katalysatoren sind genau bekannt. Bevorzugt verwendet man für die Herstellung der erfindungsgemäßen Polyacetylenteilchen Katalysatoren aus 0,05 bis 0,2 Mol Vanadium-Verbindung der Formel

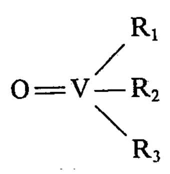

worin

| | |
|---|---|
| $R_1$ | Halogen (Chlor), |
| $R_2$, $R_3$ | unabhängig voneinander Halogen (Chlor, $OR_5$ ($R_5 = C_1-C_{20}$-Alkyl, geradkettig, cyclisch oder verzweigt), |

bedeuten, und 0,1 bis 20, bevorzugt 1 bis 10 Mol, eine Aluminiumverbindung der Formeln

$Al(R_4)_3$, $AlX(R_4)_2$, $AlX_2(R_4)$, $Al_2X_3(R_4)_3$;

worin

| | |
|---|---|
| $R_4$ | $C_1-C_{12}$ Alkyl, bevorzugt Methyl, Ethyl, Propyl, Isopropyl, Isobutyl, Octyl; |
| X | Halogen |

bedeuten.

Besonders geeignete Vanadiumverbindungen sind:

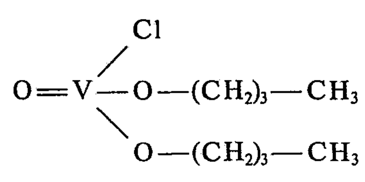

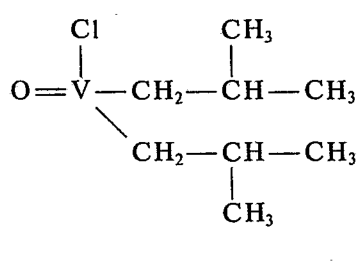

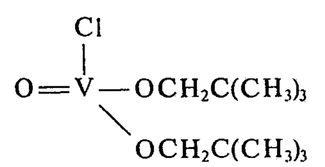

Besonders geeignete Aluminiumalkyle sind: Triethylaluminium, Tripropylaluminium, Triisopropylaluminium, Tributylaluminium, Triisobutylaluminium, Trioctylaluminium.

Geeignete Lösungsmittel sind insbesondere Kohlenwasserstoffe wie Benzol, Toluol, Hexan, Cyclohexan, Tetralin, Dekalin, halogenierte Kohlenwasserstoffe wie Methylenchlorid, Chloroform, Chlorbenzol.

Die Katalysatoren können durch Umsetzung der Vanadiumverbindung und der Aluminiumverbindung im Lösungsmittel bei Temperaturen von $-100$ bis $+30°C$ in an sich bekannter Weise hergestellt werden. Zur nachfolgenden Polymerisation benutzt man im allgemeinen Lösungen, die 5 bis 100 mMol Aluminium pro Liter Lösungsmittel enthalten. In diese Lösung wird Acetylen unter anaeroben Bedingungen eingeleitet, bei Temperaturen von $-100$ bis $+80°C$, bevorzugt $-80$ bis $+20°C$. Es entsteht dabei eine Suspension von Polyacetylen. Die suspendierten Teilchen sehen unter dem Mikroskop wie kleine Kletten aus, mit einem Durchmesser von ca. 0,01 bis 1,0 mm.

Die so erhaltenen Suspensionen von Polyacetylenteilchen enthalten im allgemeinen 0,01 bis 30 g pro Liter, bevorzugt 0,1 bis 10 g Polyacetylenteilchen pro Liter. Es kann vorteilhaft sein, diese Suspension vor ihrer Weiterbehandlung noch einmal mechanisch zu homogenisieren, z. B. mit einem Ultraturrax, dabei soll die Faserstruktur der Teilchen erhalten bleiben.

Vor der Dotierung muß in diesen Suspensionen zunächst der Ziegler-Katalysator desaktiviert bzw. entfernt werden; dies kann man in üblicher Weise durch Zufügen von Alkoholen wie Methanol, Ethanol, oder Gemischen davon oder durch Ausschütteln mit wäßrigen Säuren, z. B. Salzsäure erreichen. Man kann aber auch das Suspendiermittel, in dem der Katalysator gelöst ist, austauschen. Dies wird man tun, wenn es darauf ankommt, die Katalysatorbestandteile zu entfernen oder wenn das vorhandene Suspendiermittel für die weitere Verarbeitung ungeeignet ist.

Zur Dotierung setzt man das Dotierungsmittel in Substanz oder in Lösung der Suspension zu. Man kann bei Temperaturen von $-78$ bis $+100°C$ arbeiten, bevorzugt sind 10—30°C. Die Menge Dotiermittel ist im allgemeinen $1 \times 10^{-5}$ bis $4 \times 10^{-1}$ Mol pro Grammäquivalent an —CH-Einheiten (=13 g Polyacetylen), bevorzugt $1 \times 10^{-3}$ bis $2 \times 10^{-1}$ Mol.

Überschuß an Dotiermittel kann in der Suspension bleiben, z. B. durch erneuten Austausch des Suspendiermittels entfernt oder durch geeignete Maßnahmen zerstört werden.

Erfindungsgemäß ist p-Dotierung und n-Dotierung möglich; zur p-Dotierung kann man Oxidationsmittel verwenden.

Beispiele sind: Chlor, Brom, Iod, JCl, JBr, Halogenverbindungen wie $AsF_5$, $SbF_5$, $SbCl_5$, $AsCl_5$, $PF_5$, $POF_3$,Oxide wie NO, $NO_2$, $H_2O_2$, konz. $H_2SO_4$, $CrO_3$ oder auch Sauerstoff, Ozon, bzw. Peroxidverbindungen.

Zur n-Dotierung verwendet man meist starke Reduktionsmittel.

Beispiele sind: Alkalimetalle oder deren Naphthalide, wie Natrium, Kalium, Natriumnaphthalid oder auch Elektronendonatoren wie Amine.

Erfindungsgegenstand ist somit ein Verfahren zur Herstellung einer Suspension von dotierten Polyacetylenteilchen, das dadurch gekennzeichnet ist, daß man zunächst Acetylen mit metallorganischen Mischkatalysatoren in einem Suspendiermittel unter Bildung einer Suspension von Polyacetylenteilchen in »Kletten«-Form polymerisiert, den Katalysator desaktiviert oder entfernt, und dann durch Zusatz eines festen oder gelösten Dotierungsmittels zur Suspension p- oder n-dotiert.

Ein weiterer Gegenstand der Erfindung ist eine Suspension von n- oder p-dotierten Polyacetylenteilchen in »Kletten«-Form in einem inerten Suspendiermittel mit einem Gehalt von 0,01 bis 30 g dotiertem Polyacetylen pro Liter Suspension.

Die erfindungsgemäß erhaltenen Suspensionen von dotierten Polyacetylenteilchen können in verschiedener Weise weiterverarbeitet und angewendet werden.

So entsteht durch Entfernen des Suspendiermittels, z. B. durch Filtration, eine zusammenhängende Folie aus dotiertem Polyacetylen. Die Folie kann in beliebigen Dimensionen und beliebiger Dicke hergestellt werden.

Durch Versprühen läßt sich ein zusammenhängender Überzug von dotiertem Polyacetylen erzeugen, der auf den verschiedensten Substraten fest haftet. Die Schichtdicke läßt sich ab etwa 0,1 µm beliebig variieren. Mit geeigneten Vorrichtungen wie z. B. Schablonen lassen sich beliebige Flächengebilde erzeugen, die z. B. für gedruckte Schaltungen geeignet sind. Geeignete Substrate sind z. B. Glas, Papier, Kunststoffe, Metalle, anorganische Halbleiter und Leiter.

Gegenstand der Erfindung sind demnach auch Folien oder Überzüge aus dotiertem Polyacetylen, die durch Entfernen des Suspendiermittels aus einer Suspension von klettenförmigen dotierten Polyacetylenteilchen erhalten worden sind.

Weiter kann man in der Suspension Kunststoffe auflösen. Da man das Suspendiermittel durch Austausch nahezu beliebig wählen kann (Polyacetylen ist in allen organischen Solventien unlöslich), kann man auch fast jeden Kunststoff lösen.

Beispiele sind: Polycarbonate, Celluloseester, Polyamide, Styrol-Homo- und -Copolymerisate, Polyvinylhalogenide (PVC), Polyacrylnitril, Polyester, Polyurethane. Es können auch Kunststoffvorstufen, beispielsweise Epoxidharze gelöst werden, oder Polyisocyanat/Polyol- (oder Polyamin-) Mischungen direkt benutzt werden (Polyacetylene können im Polyol suspendiert werden). Die Polymer-Lösungen können auch übliche Zusätze wie weitere Füllstoffe, Stabilisatoren, Verlaufmittel, Pigmente, Weichmacher, Netzmittel, Antioxidantien enthalten. Aus diesen, dotierten Polyacetylenteilchen enthaltenden Kunststofflösungen — sie enthalten im allgemeinen etwa 0,01 bis 20 Gew.-% dotiertes Polyacetylen, vorzugsweise 0,1 bis 10 Gew.-%, insbesondere 0,5 bis 5 Gew.-%, in besonderen Fällen auch bis zu 99 Gew.-%, bezogen auf Kunststoff — kann man in üblicher Weise durch Entfernen des Lösungsmittels Flächengebilde wie Folien, Überzüge und Imprägnierungen, sowie Fasern herstellen. In manchen Fällen kann es vorteilhaft sein, andere, die Leitfähigkeit erhöhende Stoffe wie Ruß, Graphit, polymere oder niedermolekulare organische Leiter oder Metalle in Form von Pulvern, Fasern oder Flakes zuzufügen.

Letztlich kann man die dotierten Polyacetylenteilchen aus ihren Suspensionen auch isolieren, ohne daß sie sich zu Folien vereinigen. Man erreicht dies z. B. durch Sprüh- oder Gefriertrocknung. Erhalten wird ein Pulver aus dotiertem Polyacetylen, in dem die »Kletten«-Struktur der Teilchen weitgehend erhalten ist. Dieses Pulver läßt sich wie ein Füllstoff nach den Methoden der thermoplastischen Verarbeitung in jeden Thermoplasten einarbeiten. Man kann beispielsweise das Polyacetylenpulver mit einem thermoplastischen Kunststoff in Granulatform mischen und die Mischungen zur homogenen Verteilung extrudieren. Man kann auch Polyacetylenpulver und den thermoplastischen Kunststoff in Pulverform mischen.

Wenn das Kunststoffpulver im Suspendiermittel unlöslich ist, kann man es in der Polyacetylensuspension suspendieren und gemeinsam mit dem Polyacetylen abfiltrieren. Man erhält dann ein homogenes Gemisch. Wenn der Kunststoff löslich ist, kann man ihn in der Suspension von Polyacetylenteilchen auflösen und dann das Suspendiermittel entfernen, z. B. durch Sprühtrocknung oder Gefriertrocknung oder man fällt das Polymere mit einem geeigneten Fällungsmittel und filtriert es gemeinsam mit dem dotierten Polyacetylen ab. Man erhält zur thermoplastischen Verarbeitung geeignete Pulver. Diese Pulver können auch als Pulverlacke zur Herstellung von Überzügen dienen. Die dotierten Polyacetylen enthaltenden Kunststoffe haben sehr gute mechanische Eigenschaften. Die elektrische Leitfähigkeit läßt sich in weiten Grenzen variieren. Besonders geeignet ist ein Zusatz von dotiertem Polyacetylen zur Erzielung antistatischer Eigenschaften von Kunststoffen.

## Ausführungsbeispiele

### Beispiel I

#### Herstellung des Katalysators, Polymerisation und Aufarbeitung

In eine 2-l-Becherglasrührapparatur werden 1,3 l Toluol vorgelegt und unter einem Stickstoffstrom 300 ml Toluol abdestilliert. Unter Trockeneiskühlung werden bei —78°C 4 ml (2 mMol) Bis-(2,2-dimethylpropoxy)-vanadiumoxychlorid 0,5 molar in Toluol und 20 ml (20 mMol) Aluminiumtriisobutyl 1 molar in Toluol zugesetzt. Die Apparatur steht dabei ständig unter einem Stickstoffstrom. Mit einer Geschwindigkeit von 10 l pro Stunde wird unter Rühren 1 Stunde reines Acetylen durchgeleitet. Das Polyacetylen fällt als Niederschlag aus. Es handelt sich um rosa bis violettes klettenförmige Gebilde (Fig. 1) mit einem Durchmesser von ca. 0,05 bis 0,5 mm. Die so erhaltene Suspension enthält 4 g Polyacetylen pro Liter. Die Reaktion wird mit 0,5 g 4-Methyl-2,6-di-tert.-butylphenol (Ionol®), in 400 ml absolutem Toluol abgestoppt und das Reaktionsgemisch mit Stickstoff ausgeblasen, wobei die Temperatur auf 20°C ansteigt.

### Beispiel 2

In eine 2-l-Becherglasrührapparatur werden 1000 ml absolutes Methylenchlorid vorgelegt. Man kühlt auf —78°C ab, setzt 4,2 ml (12,5 mMol) Titantetrabutylat (100%ig) und 50 ml (50 mMol) Aluminiumtriisobutyl 1 molar in Methylenchlorid zu.

Unter Rühren werden innerhalb einer Stunde 10 g Acetylen bei —78°C durch die Katalysatorlösung geleitet, wobei dunkles Polyacetylen ausfällt. Die Reaktion wird mit einer Lösung aus 0,5 g 4-Methyl-2,6-di-tert.-butylphenol (Ionol®) in 5 ml Methanol abstoppt und die Temperatur unter einem Stickstoffstrom auf 20°C ansteigen lassen. Unter dem Mikroskop zeigt das Reaktionsgemisch dunkelviolette klettenartige Polyacetylengebilde mit einem Durchmesser von ca. 0,1 mm. Die Suspension enthält 2,5 g Polyacetylen pro Liter.

### Beispiel 3

Zu 1 l einer nach Beispiel 1 hergestellten Polyacetylensuspension fügt man unter Rühren bei 20°C eine Lösung von 4 g Iod in 100 ml Toluol und rührt 2 Stunden bei Raumtemperaturen nach. Die ursprünglich violette Lösung entfärbt sich und man erhält eine dotierte klettenförmige Polyacetylenteilchen enthaltende Suspension.

## Beispiel 4

Analog Beispiel 3 wurde eine Suspension, die nach Beispiel 2 hergestellt wurde, mit einer Lösung von 2,5 g Iod in 100 ml Methylenchlorid dotiert.

## Beispiel 5

In einem Liter einer nach Beispiel 2 hergestellten Polyacetylensuspension werden unter Rühren bei 20°C eine Lösung von 5,75 g Antimonpentachlorid in 100 ml Methylenchlorid zugesetzt und 2 Stunden bei 20°C nachgerührt. Das abfiltrierte, dotierte Polyacetylen zeigt eine spezifische Leitfähigkeit von $1{,}5 \cdot 10^{-1}\,\Omega^{-1}\,cm^{-1}$.

## Beispiel 6

Zu 1 l einer Polyacetylensuspension nach Beispiel 4 wird 1 l Cyclohexan zugesetzt und unter Rühren im Vakuum bei ca. 35°C das Methylenchlorid abdestilliert. Man ergänzt mehrmals das zum Teil mit abdestillierte Cyclohexan. Das Ende des Lösungsmittelaustausches läßt sich IR-spektroskopisch feststellen.

## Beispiel 7

Analog Beispiel 6 wird Methylenchlorid gegen Butylacetat ausgetauscht.

## Beispiel 8

Analog Beispiel 6 wird Methylenchlorid gegen Dimethylformamid ausgetauscht.

## Beispiel 9

Analog Beispiel 6 wird Methylenchlorid gegen Tetrahydrofuran ausgetauscht.

## Beispiel 10

Zu 1 l einer Polyacetylensuspension nach Beispiel 2 werden 500 ml einer 10gew.-%igen wäßrigen Salzsäure zugesetzt, geschüttelt und die wäßrige Phase, die die Katalysatorbestandteile enthält, abgetrennt. Die Methylenchloridphase, die das gesamte Polyacetylen enthält, wird nach Beispiel 4 mit Iod dotiert.

## Beispiel 11

Zu 1 l einer Polyacetylensuspension nach Beispiel 2, deren Lösungsmittel nach Beispiel 9 gegen Tetrahydrofuran ausgetauscht wurde, werden unter Rühren eine Lösung von 2,9 g Natrium-Naphthalid in 14 g Tetrahydrofuran zugesetzt. Man rührt 2 Stunden bei Raumtemperatur nach. Durch Entfernen des Lösungsmittels läßt sich dotiertes Polyacetylen mit einer spezifischen Leitfähigkeit von $3 \cdot 10^{-3}\,\Omega^{-1}\,cm^{-1}$ gewinnen.

## Beispiel 12

Zu 1 l einer Polyacetylensuspension nach Beispiel 2 fügt man 500 ml einer 10gew.-%igen Chromschwefelsäure und schüttelt gut durch. Abtrennen der wäßrigen Phase liefert eine Katalysator-freie, dotierte organische Polyacetylensuspension. Entfernen des Lösungsmittels liefert eine Polyacetylenfolie mit einer spezifischen Leitfähigkeit von $3 \cdot 10^{-2}\,\Omega^{-1}\,cm^{-1}$.

Beispiel 13

Eine nach Beispiel 3 hergestellte Suspension, die Ioddotiertes Polyacetylen enthält, wird über eine Nutsche mit Papierfilter abgesaugt und mit Methylenchlorid nachgewaschen. Vom Filterpapier läßt sich eine metallisch glänzende, Iod-dotierte Polyacetylenfolie mit einer speziellen Leitfähigkeit von $2 \cdot 10^{-1}\ \Omega^{-1}\ cm^{-1}$ abheben. Foliendurchmesser und Folienstärke lassen sich durch Größe der Nutsche bzw. abgesaugte Suspensionsmenge genau einstellen.

Beispiel 14

Eine mit $Iod_2$-dotierte Polyacetylensuspension nach Beispiel 4 wird auf eine Oberfläche aus Glas, Papier, Metall, anorganischen Leitern und Halbleitern oder Kunststoff gesprüht. Dabei bildet sich ein fest haftender Überzug aus dotiertem Polyacetylen. Die Form des Überzugs kann durch Schablonen beliebig gestaltet werden. Die Dicke des Überzugs läßt sich durch die aufgesprühte Menge beliebig variieren.

**Patentansprüche**

1. Verfahren zur Herstellung einer Suspension von dotierten Polyacetylenteilchen, dadurch gekennzeichnet, daß man zunächst Acetylen mit metallorganischen Mischkatalysatoren in einem Suspendiermittel unter Bildung einer Suspension von Polyacetylenteilchen in »Kletten«-Form polymerisiert, den Katalysator desaktiviert oder entfernt, gegebenenfalls das Suspendiermittel austauscht, und dann durch Zusatz eines Dotierungsmittels in Substanz oder in Lösung zur Suspension p- oder n-dotiert.

2. Suspension von n- oder p-dotierten Polyacetylenteilchen in »Ketten«-Form mit einem Teilchendurchmesser zwischen 0,01 und 1 mm in einem inerten Suspendiermittel mit einem Gehalt von 0,01 bis 30 g dotiertem Polyacetylen pro Liter Suspension.

3. Folien oder Überzüge aus dotiertem Polyacetylen, die durch Entfernen des Suspendiermittels aus einer Suspension von klettenförmigen dotierten Polyacetylenteilchen erhalten worden sind.

**Claims**

1. Process for the production of a suspension of doped polyacetylene particles, characterised in that acetylene is initially polymerised with organometallic mixed catalysts in a suspending agent with the formation of a suspension of polyacetylene particles in »burr« form, the catalyst is deactivated or removed, the suspending agent is optionally replaced, and then p- or n-doping is carried out by adding a doping agent as such or in solution to the suspension.

2. Suspension of n- or p-doped polyacetylene particles in »burr« form having a particle diameter between 0.01 and 1 mm in an inert suspending agent containing 0.01 to 30 g of doped polyacetylene per litre of suspension.

3. Films or coatings of doped polyacetylene, which have been obtained by removing the suspending agent from a suspension of burr-shaped doped polyacetylene particles.

**Revendications**

1. Procédé de production d'une suspension de particules de polyacéthylène dopé, caractérisé en ce qu'on polymére tout d'abord l'acétylène avec des cocatalyseurs organométalliques dans un agent de mise en suspension avec formation d'une suspension de particules de polyacétylène en forme de »chardon«, on désactive le catalyseur ou on l'élimine, on remplace le cas échéant l'agent de mise en suspension puis on effectue un dopage p ou n par addition à la suspension d'un agent de dopage en substance ou en solution.

2. Suspension de particules de polyacéthylène à dopage n ou p en forme de »chardon« avec un diamètre de particules compris entre 0,01 et 1 mm dans un agent inerte de mise en suspension, avec une teneur de 0,01 à 30 g de polyacéthylène dopé par litre de suspension.

3. Feuilles ou enveloppes en polyacéthylène dopé qui ont été obtenues par élimination de l'agent de mise en suspension d'une suspension de particules de polyacétylène dopé en forme de chardon.

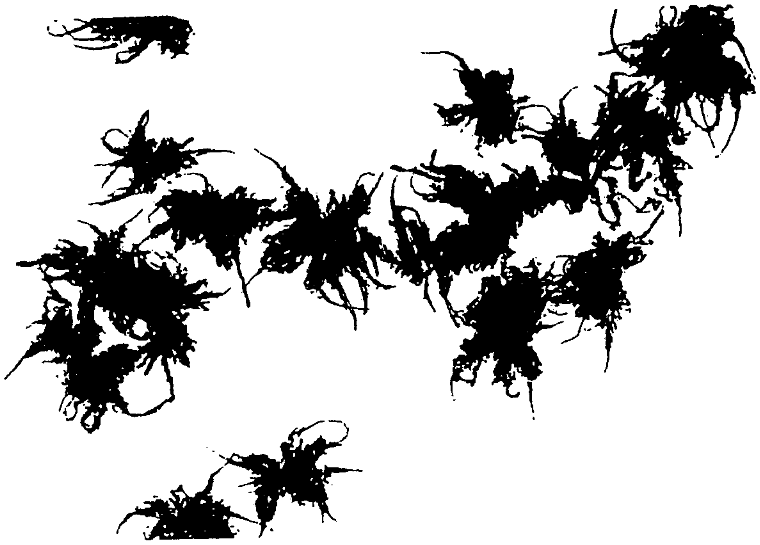

FIG. 1